# EUROPEAN PATENT APPLICATION

(11) **EP 1 764 640 A2**
(43) Date of publication of application: **21.03.2007**
(21) Application number: 06019198.8
(22) Date of filing: 13.09.2006
(51) Int. Cl.: G02B 21/36

(54) **Microscope for multipoint time-lapse imaging**

(30) Priority: 15.09.2005 JP 2005268617; 25.07.2006 JP 2006202229; 04.09.2006 JP 2006238894
(71) Applicant: Olympus Corporation, Tokyo 151-0072 (JP)
(72) Inventor: Kagayama, Akitsugu, Hachioji-shi Tokyo 192-0911 (JP); Tsuchiya, Atsuhiro, Hachioji-shi Tokyo 192-0031 (JP); Endo, Hideaki, Hino-shi Tokyo 191-0003 (JP); Hasegawa, Kazuhiro, Hachioji-shi Tokyo 192-0914 (JP)
(74) Representative: von Hellfeld, Axel

(57) **Abstract**

An observation apparatus includes an illumination unit (13, 15, 22 to 24, 31 to 34) that illuminates a specimen (S); an imaging unit (18) that captures an image of the specimen (S) to generate an observation image; and an imaging and display controller (51) that controls the imaging unit (18) so that an image of the specimen (S) is preliminary captured to generate a preliminary observation image, and controls a display unit (55) so that the preliminary observation image is,displayed. The apparatus also includes a storage controller (52) that stores, in a storage unit (58), a position selected based on the preliminary observation image and employed as a main observation position for a main observation of a partial region inside the specimen (S); and an illumination controller (52) that controls the illumination unit (13, 15, 22 to 24, 31 to 34) so that the specimen (S) is illuminated only in a time period during which the imaging unit (18) captures an image of the specimen (S), at least when the imaging unit (18) generates the preliminary observation image.

## Description

### TECHNICAL FIELD

The present invention relates to an observation apparatus that allows for a selective observation of a partial region of a specimen.

### BACKGROUND ART

One conventional technique of microscopy of a specimen, such as a living cell, includes capturing an image of the specimen at time intervals (hereinafter such a manner of image-taking will be referred to as time lapse imaging) to generate an observation image, and reproducing a series of observation images after the time-lapse imaging is finished, thereby observing a moving picture to check a morphological change in the specimen over time. Such a conventional technique is considered to be highly effective for an observation of temporal change in the specimen.

In recent years, the time lapse imaging is sometimes performed at plural imaging positions, for example, when living cells cultured under the same condition are tested with plural types of agents for confirmation of the effect of the agents, or when temporal changes of different cells are observed under the same environment.

When the time lapse imaging is performed at plural imaging positions (this manner of image-taking will be hereinafter referred to as multipoint time lapse imaging), the plural imaging positions are not always located in a viewing field of one microscope. Even if the imaging positions reside on one particular living cell under the observation, one or more imaging positions are often located outside the viewing field of the microscope. In addition, plural imaging positions often reside respectively on different living cells.

One conventional imaging technique to accommodate the inconveniences described above is described in Japanese Patent Application Laid-Open No. 2002-277754 (KOKAI). A structure and a method described in JP-A No. 2002-277754 (KOKAI) allow for the multipoint time lapse imaging. The described method includes steps of placing a specimen containing living cells on a stage whose positioning is electrically controllable along X, Y, and Z axes, and previously setting positional coordinates of plural imaging positions, exposure of an imaging element at the imaging positions, a time interval of the time lapse imaging for each imaging position, and the number of images to be captured.

When the multipoint time lapse imaging is performed, a screening is performed to set the imaging positions before an actual imaging starts. Conventionally, during the screening, a specimen, i.e., living cells are irradiated with an exciting light, a live image of the specimen is displayed, and an operator sets the imaging positions while looking at the live image.

While the live image is displayed for the screening, the living cells are kept irradiated with the exciting light. The irradiation with the exciting light, however, causes discoloration and damages of the living cells, and preferably be suppressed as far as possible.

### DISCLOSURE OF INVENTION

An observation apparatus according to one aspect of the present invention includes an illumination unit that illuminates a specimen; an imaging unit that captures an image of the specimen to generate an observation image; an imaging and display controller that controls the imaging unit so that an image of the specimen is preliminary captured to generate a preliminary observation image which is a still image, and controls a display unit so that the preliminary observation image is displayed; a storage controller that stores, in a storage unit, a position which is selected based on the preliminary observation image, the position being employed as a main observation position for a main observation of a partial region inside the specimen; and an illumination controller that controls the illumination unit so that the specimen is illuminated only in a time period during which the imaging unit captures an image of the specimen, at least when the imaging unit generates the preliminary observation image.

The above and other objects, features, advantages and technical and industrial significance of this invention will be better understood by reading the following detailed description of presently preferred embodiments of the invention, when considered in connection with the accompanying drawings.

### BRIEF DESCRIPTION OF DRAWINGS

FIG. 1 is a schematic diagram of an observation apparatus commonly used in embodiments of the present invention;
FIG. 2 is a flowchart of screening procedure according to a first embodiment of the present invention;
FIG. 3 shows an example of a display screen on a monitor according to the first embodiment of the present invention;
FIG. 4 shows an example of a popup menu displayed on the display screen of the monitor of FIG. 3;
FIG. 5 shows an image display window and an enlarged display window presented on the display screen of the monitor of FIG. 3;
FIG. 6 shows imaging frames before and after a correction of position;
FIG. 7A shows an example of an image display window according to a second embodiment of the present invention;
FIG. 7B shows an image obtained through extraction of pixels with brightness within a predetermined range from the image of the image display window of FIG. 7A;
FIG. 8 shows an example of a window which is displayed on the image display window of FIG. 7B and is used for setting a time lapse imaging position;
FIG. 9 shows an image display window used for manual setting of the time lapse imaging position;
FIG. 10 shows an image display window used for automatic setting of the time lapse imaging position;
FIG. 11 shows an enlarged display window according to the second embodiment of the present invention;
FIG. 12 shows a high-resolution still image which corresponds to a small section and is generated according to a third embodiment of the present invention, and an image obtained by tiling of a compressed image thereof; and
FIG. 13 shows an image display window and an enlarged display window according to the third embodiment of the present invention;
FIG. 14 is a schematic diagram of an observation apparatus according to a fourth embodiment of the present invention;
FIG. 15A shows a selection window for selecting a generation method for a macro image;
FIG. 15B shows an imaging path selection button which is displayed in response to the click of a tiling button shown in FIG. 15A;
FIG. 16A shows a specimen image corresponding to a tiled macro image;
FIG. 16B shows a display sequence of the tiled macro image;
FIG. 16C shows a macro image which has not completed tiling;
FIG. 17A shows an imaging area of macro images set on the specimen image;
FIGS. 17B to 17D show different macro images in the imaging area shown in FIG. 17A;
FIG. 18 shows a map image for selecting the imaging area of the macro image; and
FIG. 19 shows thumbnail macro images.

### BEST MODE(S) FOR CARRYING OUT THE INVENTION

Exemplary embodiments of the present invention will be described below with reference to the accompanying drawings.

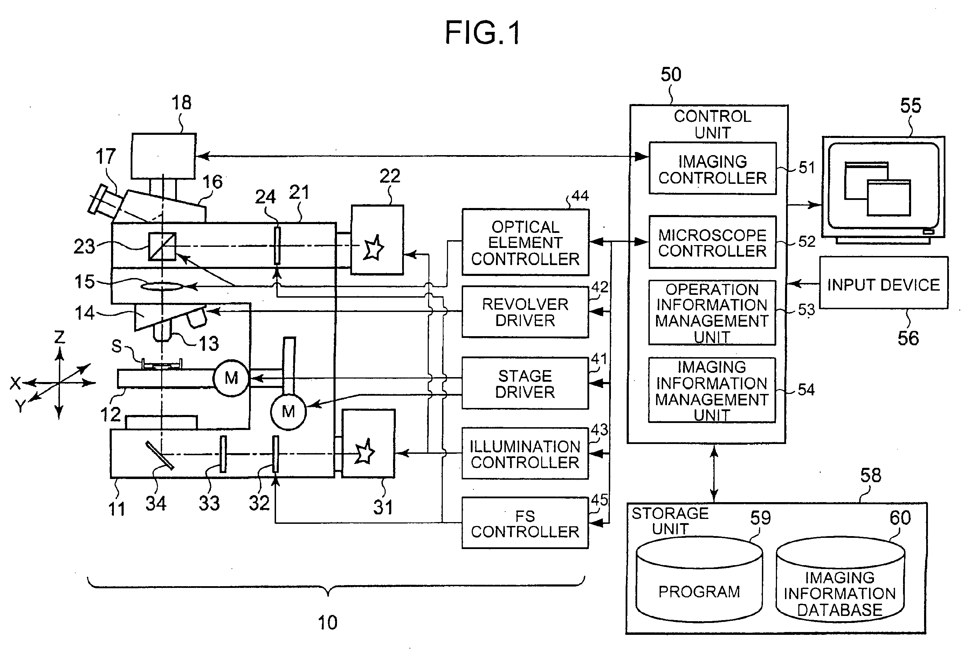

FIG. 1 is a schematic diagram of an observation apparatus commonly used in embodiments described below.

The observation apparatus includes a microscope 10. The microscope 10 includes a microscope body 11, an intermediate lens barrel 21 arranged over the microscope body 11, and an eyepiece lens barrel 16 arranged on the intermediate lens barrel 21.

The microscope body 11 has an electromotive stage 12 which is movable in a three-dimensional direction (XYZ directions), and a revolver 14 which can hold plural objective lenses 13. Generally, the objective lenses 13 with different magnifications are attached to the revolver 14, and one of the attached objective lenses 13 is arranged on an optical path of the microscope 10. A specimen S is placed on the electromotive stage 12. The specimen S contains plural living cells that rest in a lower portion of a transparent container filled with culture solution, for example. The electromotive stage 12 has plural built-in motors M, and is capable of moving the specimen S placed thereon in a three-dimensional manner relative to the objective lens 13.

A transmitting illumination light source 31 is attached to the microscope body 11. The microscope body 11 has a field shutter (FS) 32, a neutral density (ND) filter 33, and a mirror 34. The transmitting illumination light source 31, the field shutter 32, the ND filter 33, and the mirror 34 together form a transmitting illumination optical system which serves to illuminate the specimen S from below.

An incident-light illumination light source 22 is attached to the intermediate lens barrel 21. The intermediate lens barrel 21 has a field shutter 24. Further, necessary optical elements are arranged inside the intermediate lens barrel 21 as appropriate for various types of microscopy, such as polarization, phase difference, Nomarski, and fluorescent microscopies. Such optical elements are, for example, various filters and polarizing element, and denoted collectively by reference character 23. Further, a variable power lens 15 is arranged as appropriate inside the microscope body 11 so that an observation magnification can be easily changed. The incident-light illumination light source 22, the optical element 23, the variable power lens 15, and the objective lens 13 together form an incident-light illumination optical system that serves to illuminate the specimen S from above.

The eyepiece lens barrel 16 includes an eyepiece 17 which allows an observation of the specimen S with a naked eye, and an imaging unit 18 which serves to capture the image of the specimen S and to generate a specimen image as an observation result. The imaging unit 18 may include a charge-coupled device (CCD), for example, though not limited thereto.

The microscope further includes a stage driver 41, a revolver driver 42, an illumination controller 43, an optical element controller 44, and an FS controller 45.

The stage driver 41 drives the electromotive stage 12 in a horizontal direction (XY direction drive) and in a vertical direction (Z direction drive) in order to change an imaging position of the imaging unit 18. Here, the term "imaging position" denotes an area whose image is captured by the imaging unit 18 on a focal plane of the imaging unit 18.

The revolver driver 42 rotates the revolver 14 to arrange the objective lens 13 of a desired magnification on the optical path.

The illumination controller 43 serves to control various lighting necessary for the imaging. For example, the illumination controller 43 turns on and turns off the incident-light illumination light source 22 that illuminates the specimen S from above and the transmitting illumination light source 31 that illuminates the specimen S from below, while adjusting the amount of light of the light sources 22 and 31.

The optical element controller 44 arranges the optical element 23 on the optical path, retracts the optical element 23 from the optical path, and exchanges the variable power lens 15.

The FS controller 45 controls the field shutters 24 and 32 so that the transmitting illumination optical system and the incident-light illumination optical system illuminate only the imaging area set for the imaging by the imaging unit 18.

The observation apparatus further includes a control unit 50, a monitor 55 that displays the specimen image and various pieces of information, an input device 56, and a storage unit 58 that stores the specimen image, a coordinate of the imaging position, an imaging condition, and the like. The control unit 50 includes an imaging controller 51, a microscope controller 52, an operation information management unit 53, and an imaging information management unit 54. The imaging controller 51 serves as an imaging and display controller. The microscope controller 52 serves as a storage controller, an illumination controller, and a movement controller. The operation information management unit 53 serves as an observation area display controller and a brightness range display controller. The imaging information management unit 54 serves as a recording controller.

The control unit 50 includes a central processing unit (CPU), a random access memory (RAM), and the like. The input device 56 includes, for example, a pointing device such as a mouse, and a keyboard. The storage unit 58 is, for example, a hard disk drive. The storage unit 58 stores a program 59 and an imaging information database 60. The program 59 includes, for example, a program for operating the CPU as the imaging controller 51, the microscope controller 52, the operation information management unit 53, and the imaging information management unit 54, and a program for controlling the imaging unit 18, the imaging controller 51, and the microscope controller 52 to perform a time-lapse imaging of a previously designated area. The program used here operates based on Microsoft Windows^{®} as basic software, for example, and various commands are given via the input device 56.

The microscope controller 52 controls the stage driver 41, the revolver driver 42, the illumination controller 43, the optical element controller 44, and the FS controller 45, and makes these units perform necessary operations for the imaging. The imaging controller 51 performs various controls of the imaging unit 18 according to a previously set imaging condition, and performs control to display the specimen image generated by the imaging unit 18 on the monitor 55. Here, the previously set imaging condition is a condition related with a time of exposure, gain, or the like, and is appropriately set and changed for each specimen S.

The operation information management unit 53 cooperates with the monitor 55 and the input device 56, and configures various graphical user interfaces (GUI). The GUI is, for example, a GUI for standing by for a designation of a coordinate on the specimen image, a GUI for giving a command to the imaging unit 18 to capture an image of the specimen S, a GUI for setting a time-lapse imaging position, and a GUI for standing by for a selection of an imaging frame and/or a command for moving an imaging frame while displaying the imaging frame on a monitor screen.

The microscope controller 52 controls the stage driver 41 and the electromotive stage 12 based on a command input from the input device 56 via the GUI displayed on the monitor 55 by the operation information management unit 53. The microscope controller 52 moves the imaging position within an XY plane, and moves the imaging position in a Z direction, for example.

The electromotive stage 12 has a mechanical origin for each of the X, Y, and Z directions. The microscope controller 52 internally manages an amount of movement instructed to the stage driver 41 based on the mechanical origins. Hence, the microscope controller 52 can recognize a current positional coordinate of the electromotive stage 12. In other words, the microscope controller 52 has a function of detecting the position of the electromotive stage 12 relative to the optical axis of the objective lens 13, and outputs the current positional coordinate (X, Y, Z) of the electromotive stage 12 as a current position of an observation viewing field. As an alternative structure, a separate position detector may be provided for detecting the current position of the electromotive stage 12. Then, the position detector may directly recognize the positional coordinate of the electromotive stage 12.

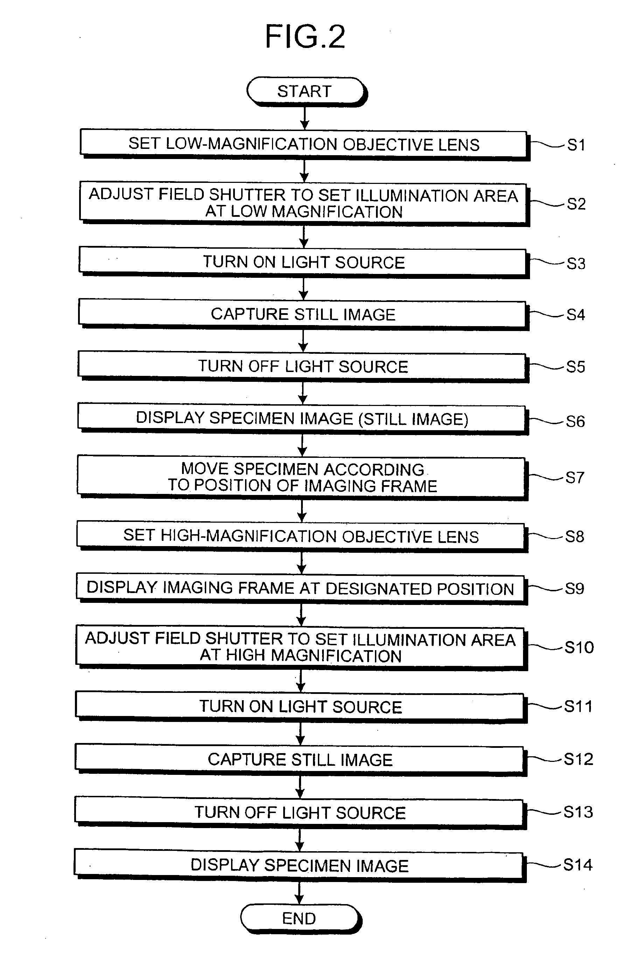

A screening procedure which is carried out as a preliminary observation according to the first embodiment will be described with reference to the flowchart of FIG. 2.

First, the microscope controller 52 makes the revolver driver 42 arrange the objective lens 13 of a low magnification on the optical path of the microscope relative to the specimen S so that a wide area of the specimen S can be imaged (step S1). The microscope controller 52 makes the FS controller 45 adjust the field shutter 24 within the incident-light illumination optical system, or the field shutter 32 within the transmitting illumination optical system, and set an illumination area equal to the viewing field area of the objective lens 13 with a low magnification (step S2).

Subsequently, the microscope controller 52 makes the illumination controller 43 turn on one of the incident-light illumination light source 22 and the transmitting illumination light source 31 corresponding to the field shutter 24 or 32 that is adjusted in step S2 (step S3). The imaging controller 51 gives an imaging command to the imaging unit 18, and in response, the imaging unit 18 images the specimen S via the objective lens 13 and generates the specimen image as a still image, which is a preliminary observation image (step S4). Thereafter, the microscope controller 52 makes the illumination controller 43 turn off one of the incident-light illumination light source 22 and the transmitting illumination light source 31 that is turned on in step S3 (step S5).

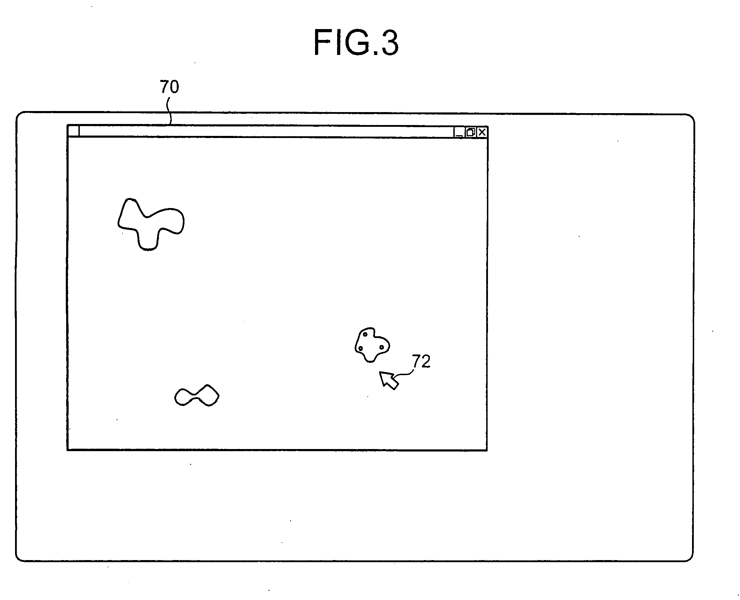

Thus, one of the transmitting illumination optical system and the incident-light illumination optical system that is employed for imaging can illuminate the specimen S only for a time period the imaging unit 18 images the specimen S, since the microscope controller 52 controls the incident-light illumination light source 22 or the transmitting illumination light source 31 via the illumination controller 43. Further, since the microscope controller 52 makes the FS controller 45 adjust the field shutter 24 or the field shutter 32, only the imaging area of the imaging unit 18 on the specimen S can be illuminated. The imaging controller 51, as shown in FIG. 3, displays an image display window 70 on the screen of the monitor 55 to present the specimen image as a still image inside the image display window 70 (step S6).

The operation information management unit 53 displays a mouse pointer 72 on the screen of the monitor 55. The mouse pointer 72 serves to allow designation of a coordinate on the specimen image displayed in the image display window 70. A user moves the mouse pointer 72 through manipulation of a mouse included in the input device 56. By clicking the mouse button (for example, double clicks the mouse button) at a desired position, the user can designate a coordinate on the specimen image displayed in the image display window 70.

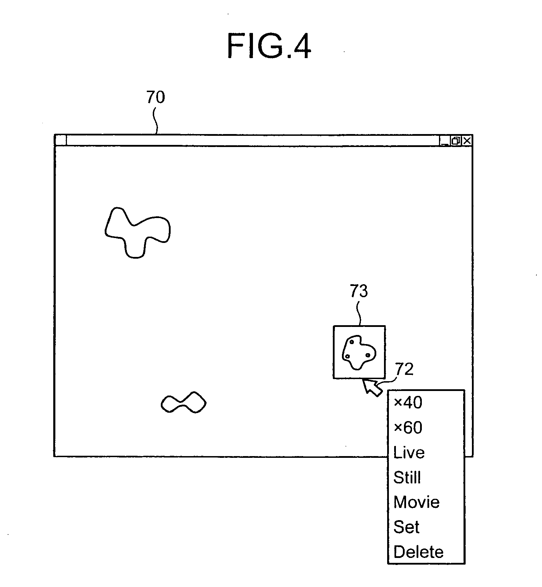

Then, the microscope controller 52 arranges the objective lens 13 of a high magnification on the optical path of the microscope relative to the specimen S using the revolver driver 42 for the time-lapse imaging, which is a main observation (step S7). The operation information management unit 53 displays an imaging frame 73 on the specimen image displayed inside the image display window 70 as shown in FIG. 4 in response to a predetermined click manipulation of the mouse (for example, right-clicking for menu selection) (step S8).

The imaging frame 73 has a size corresponding to an imaging magnification, i.e., a magnification of the currently selected objective lens 13. In other words, the imaging frame 73 represents an area of the specimen image which can be imaged by the imaging unit 18. The area corresponds to an observation area of the specimen S which is observed through the time-lapse imaging. The imaging frame 73 can be moved according to a dragging manipulation of the mouse by the user. The user can create a desired number of imaging frames 73, in other words, the operation information management unit 53 can display plural imaging frames 73.

When the user performs a predetermined click manipulation (for example, when the user right clicks the mouse button) while the imaging frame 73 is in a selected state, the operation information management unit 53 displays a popup menu, which is a menu of various commands, on the display screen of the monitor 55. Specifically, as shown in FIG. 4, the popup menu may include commands such as "Still" (command for generating one still image of a set brightness), "Movie" (command for generating a moving picture lasting for a predetermined time period), "Live" (command for displaying a live image), "Set" (command for setting a time-lapse imaging position), "Delete" (command for deleting an imaging frame), and "x 40" or "x60" (command for selecting a magnification).

When the user selects the command "Set" to set the time-lapse imaging position, for example, the microscope controller 52 stores a coordinate of a position on the specimen S corresponding to the position of the selected imaging frame 73 as the time-lapse imaging position, i.e., as a main observation position, in the imaging information database 60 inside the storage unit 58. When the user selects the command "Delete" to delete the imaging frame, the operation information management unit 53 deletes the selected imaging frame 73. The user can select the command "Live" for the display of live image to confirm the set position, and the command "Live" is not shown in the popup menu when the time-lapse imaging is executed. When the live image is to be displayed, a caution message is displayed. When a predetermined time elapses, or when the user does not input a command via the mouse for a predetermined time period, the live image display is automatically cancelled.

When the user selects the command "Still" to capture a still image, or the command "Movie" to capture a moving picture, the operation information management unit 53 gives a command for imaging the area represented by the selected imaging frame 73. In response to the command, the microscope controller 52 makes the stage driver 41 drive the electromotive stage 12 based on the coordinate of the imaging frame 73 and arrange an area of the specimen S corresponding to the imaging frame 73 on the optical axis of the microscope so that the imaging position of the imaging unit 18 coincides with the area represented by the imaging frame 73 (step S9). Further, the microscope controller 52 adjusts the field shutter 24 of the incident-light illumination optical system or the field shutter 32 of the transmitting illumination optical system using the FS controller 45, and sets an illumination area equal to the viewing field area of the objective lens 13 with a high magnification (step S10).

Subsequently, the microscope controller 52 makes the illumination controller 43 turn on the incident-light illumination light source 22 or the transmitting illumination light source 31 corresponding to the field shutter 24 or 32 that is adjusted in step S10 (step S11). The imaging controller 51 gives an imaging command to the imaging unit 18, and the imaging unit 18 captures an image of the specimen S via the objective lens 13 and generates the specimen image (step S12). Thereafter, the microscope controller 52 makes the illumination controller 43 turn off the incident-light illumination light source 22 or the transmitting illumination light source 31 that is turned on in step S11 (step S13).

Similarly, in the generation of the specimen image as a re-observation image, the transmitting illumination optical system or the incident-light illumination optical system that is used for the imaging can illuminate the specimen S only for the period the imaging unit 18 captures an image of the specimen S, since the microscope controller 52 controls the incident-light illumination light source 22 or the transmitting illumination light source 31 using the illumination controller 43. Further, since the microscope controller 52 adjusts the field shutter 24 or the field shutter 32 via the FS controller 45, the transmitting illumination optical system or the incident-light illumination optical system can illuminate only the imaging area to be imaged by the imaging unit 18.

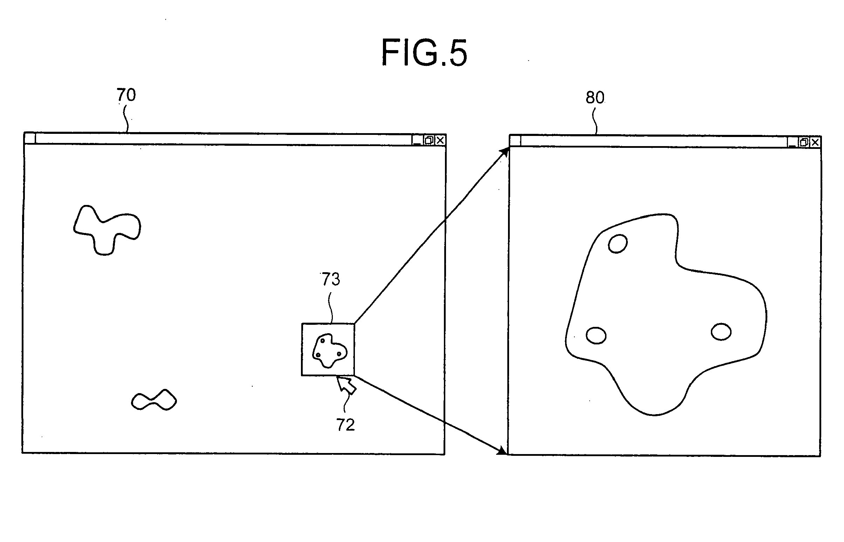

The imaging controller 51 displays an enlarged display window 80 on the display screen of the monitor 55 as shown in FIG. 5, and displays the specimen image generated in step S12 within the enlarged display window 80 (step S14). The image displayed in the enlarged display window 80 is a still image when the command for capturing the still image is selected, and is a moving picture when the command for capturing the moving picture is selected. In other words, the imaging controller 51 displays the specimen image as the still image or the dynamic image on the display screen of the monitor 55 as captured from an area corresponding to the imaging frame 73 designated by the mouse pointer 72.

As described above, the imaging unit 18, after capturing the image of the specimen S at the low magnification and generating the specimen image covering the wide area as a still image, captures the image of the specimen S at the high magnification at a imaging position changed by the microscope controller 52 and generates the specimen image as a still image or a dynamic image. The specimen image generated at first is a single still image covering a wider area than the specimen image generated later. Further, the imaging controller 51 displays the enlarged display window 80 on the display screen of the monitor 55 separate from the image display window 70 in which the first generated specimen image of the low magnification is displayed. The imaging controller 51 displays the specimen image of the high magnification covering the area corresponding to the imaging frame 73 designated by the mouse pointer 72 inside the enlarged display window 80. Thus, the user can easily determine whether to set the currently selected imaging frame 73 as the time-lapse imaging position or not.

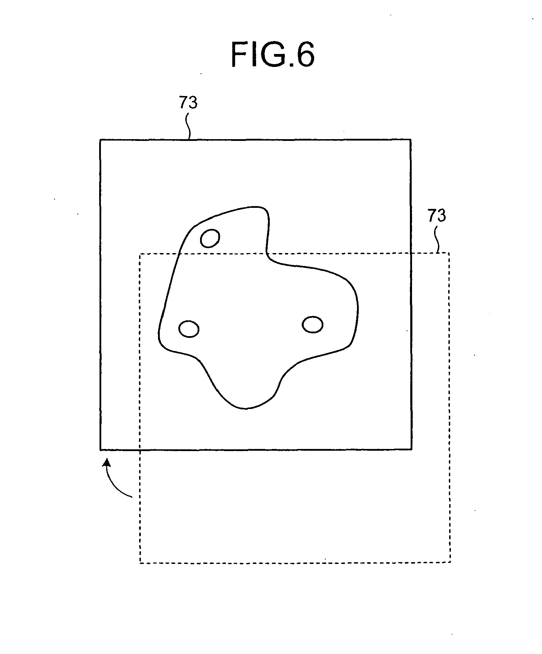

Further, when command information to correct the position of the imaging frame 73 is input through the dragging manipulation of the mouse or the like, the operation information management unit 53 can move the position of the selected imaging frame 73 to the position designated by the command information and display the imaging frame 73 at the corrected position. Specifically, as shown in FIG. 6, if the displayed imaging frame 73 runs across the cell to be observed (broken line in FIG. 6), the user can select the imaging frame 73 by the mouse pointer 72 and move by dragging, thereby correcting the position of the imaging frame 73 so as to enclose the cell inside (solid line in FIG. 6).

When the user selects the command "Set" for setting the time-lapse imaging position, the microscope controller 52 sets the coordinate of a central position, for example, of the selected imaging frame 73 as the coordinate of the selected imaging frame 73, and stores the coordinate as the time-lapse imaging position in the imaging information database 60 of the storage unit 58. Further, the microscope controller 52 stores at least one of the imaging condition of the imaging unit 18 and the illumination condition of the incident-light illumination optical system or the transmitting illumination optical system at the time the specimen image as the re-observation image is generated as the time-lapse imaging condition in the imaging information database 60.

When the program for the time-lapse imaging is executed, the imaging controller 51 executes the time-lapse imaging following the time-lapse imaging condition stored in the imaging information database 60. At the execution of the time-lapse imaging, the microscope controller 52 positions the imaging position of the imaging unit 18 based on the time-lapse imaging position. Further, the imaging controller 51 makes the imaging unit 18 capture the image of the specimen S based on the time-lapse imaging condition and generate the specimen image. At the same time, the microscope controller 52 stores the generated specimen image in the imaging information database 60 as a time-lapse specimen image.

In the observation apparatus according to the first embodiment, the user performs the screening while looking at the specimen image as a still image generated by the imaging of the wide area of the specimen S, and the specimen S is illuminated only during the period of the imaging. Therefore, compared with the method where the user performs the screening while looking at the live image, the time of the illumination of the specimen S is extremely short. Therefore, the illumination-induced discoloration and the damage of the specimen S can be well suppressed.

In the first embodiment, the illumination area is restricted by the transmitting-type field shutter 24 or 32 so that only the imaging area of the specimen S to be imaged by the imaging unit 18 is illuminated. An illumination pattern, however, can be alternatively formed by a reflective-type field shutter including a deflective mirror device (DMD).

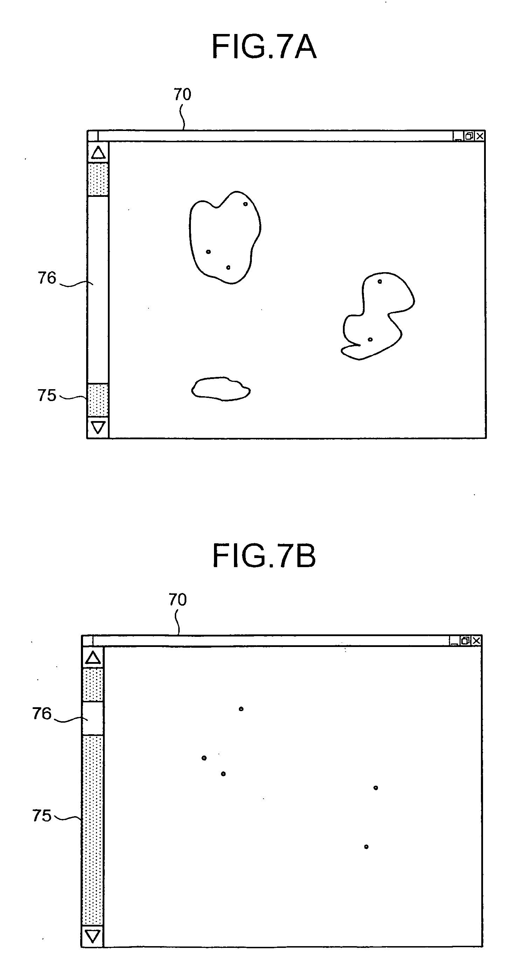

In a second embodiment, similarly to the first embodiment, the specimen image of the wide area is first generated as a still image as the preliminary observation image and displayed on the image display window 70. In the second embodiment, the operation information management unit 53 configures a GUI for designating a brightness range of pixels to be displayed on the screen of the monitor 55, in addition to the GUIs described in relation with the first embodiment above, in cooperation with the monitor 55 and the input device 56. Therefore, a brightness range designating bar 75 is displayed in the image display window 70 as shown in FIG. 7A, so that the brightness range of the pixels displayed on the screen of the monitor 55 can be designated. The brightness range designating bar 75 has a slider 76 which reflects the brightness range of the pixels to be displayed on the screen of the monitor 55. A position and a length of the slider 76 are changeable through the dragging manipulation of the mouse. The imaging controller 51 extracts only the pixels with the brightness within the brightness range corresponding to the position and the length of the slider 76 from the first generated still specimen image, and displays the same on the image display window 70. In FIG. 7B, the lower end of the slider 76 shown in FIG. 7A is moved upward and the length of the slider 76 is made shorter. Accordingly, FIG. 7B shows an image with pixels of relatively high brightness as the display image within the image display window 70.

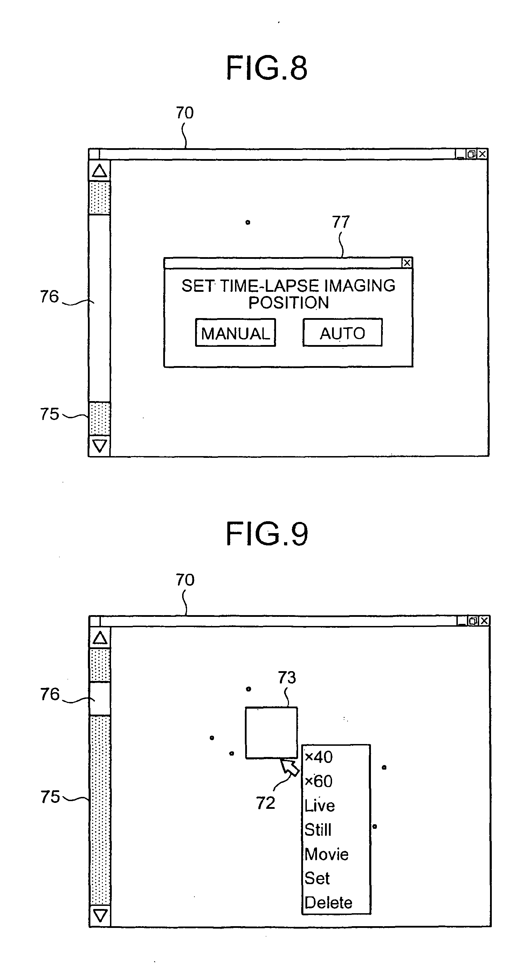

The operation information management unit 53 displays a window 77 for the setting of the time-lapse imaging position in response to the predetermined click manipulation of the mouse (for example, menu selection by right click) as shown in FIG. 8. The window 77 includes MANUAL button for manual setting of the time-lapse imaging position and an Auto button for automatic setting of the time-lapse imaging position.

When the user selects the MANUAL button, the operation information management unit 53 displays the imaging frame 73 on the specimen image inside the image display window 70 as shown in FIG. 9, similarly to the first embodiment. The user can create a desired number of imaging frames 73 by performing the predetermined click manipulation of the mouse (for example, menu selection by right click). The imaging frame 73 has a size corresponding to the previously set high magnification of the objective lens 13, i.e., the imaging magnification, and the user can move the imaging frame 73 by dragging the mouse. For example, when the objective lens 13 with 40-fold magnification (x40) is set, the imaging frame 73 corresponding to the magnification (x40) is displayed. If the objective lens 13 is replaced later with one with 60-fold magnification (x60), the imaging frame 73 is changed accordingly and displayed in a small size.

Further, similarly to the first embodiment, if the user performs a predetermined click manipulation of the mouse (for example, if the user right clicks the mouse button) while the imaging frame 73 is in a selected state, the operation information management unit 53 displays the popup menu including various commands on the screen of the monitor 55. When the user selects the command "Set" for setting the time-lapse imaging position, the microscope controller 52 can store the coordinate of the position of the specimen S corresponding to the position of the selected imaging frame 73 as the time-lapse imaging position as the main observation position in the imaging information database 60 similarly to the first embodiment. Further, the imaging controller 51 stores previously set imaging condition as the time-lapse imaging condition in the imaging information database 60. Still further, when the user selects the command for deleting the imaging frame, the operation information management unit 53 deletes the selected imaging frame 73.

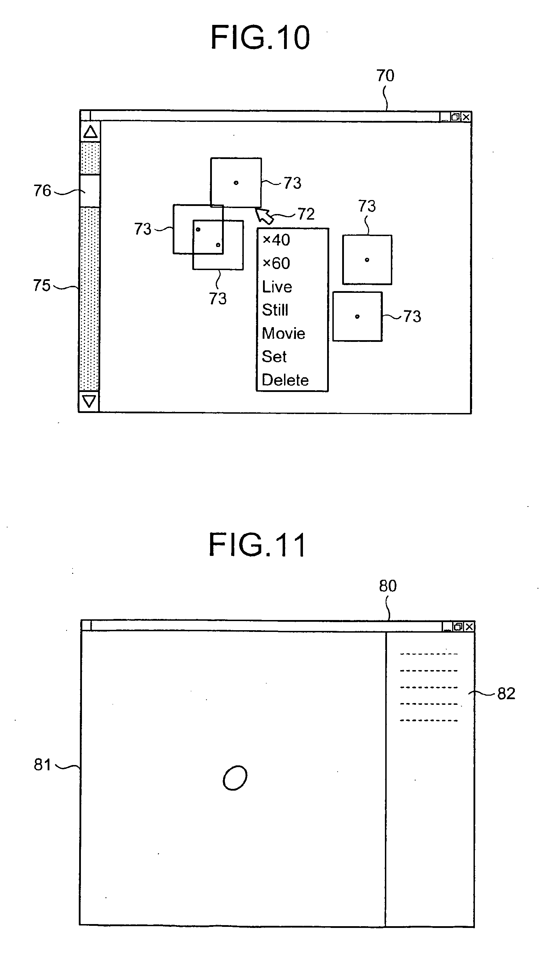

When the user selects AUTO button, the operation information management unit 53 extracts regions of the currently displayed image in the image display window 70. Then, the operation information management unit 53 finds a central position of each extracted region and displays the imaging frame 73 around the found center as shown in FIG. 10. The imaging frame 73 has a size corresponding to the previously set high magnification of the objective lens 13, i.e., the imaging magnification, and the user.can move the imaging frame 73 by dragging the mouse. The microscope controller 52 stores a coordinate of a central position of the imaging frame 73, for example, as the coordinate of each imaging frame 73 in the imaging information database 60 of the storage unit 58 as the time-lapse imaging position. The imaging controller 51 further stores the previously set imaging condition in the imaging information database 60 in the storage unit 58 as the time-lapse imaging condition.

Further, if the user performs a predetermined click manipulation of the mouse (for example, when the user right clicks the mouse button) while the imaging frame 73 is selected, the operation information management unit 53 displays the popup menu of various commands on the screen of the monitor 55. The commands included in the popup menu are, for example: "Still" for capturing a still image; "Movie" for capturing a moving picture; "Live" for displaying a live image; "Delete" for deleting the imaging frame; "x40" or "x60" for selecting the magnification. When the user selects the command "Delete" to delete the imaging frame, the operation information management unit 53 deletes the selected imaging frame 73, and the imaging information management unit 54 deletes the time-lapse imaging information corresponding to the selected imaging frame 73 from the imaging information database 60.

Whenever the user selects the command "Still" to capture a still image, or the command "Movie" to capture a moving picture, the operation information management unit 53 gives a command to capture an image in an area corresponding to the selected imaging frame 73. The microscope controller 52, in response to the command, controls the electromotive stage 12 using the stage driver 41 based on the coordinate of the imaging frame 73 so that the imaging position of the imaging unit 18 coincides with the area of the currently selected imaging frame 73. Further, the microscope controller 52 adjusts the field shutter 24 of the incident-light illumination optical system or the field shutter 32 of the transmitting illumination optical system by the FS controller 45, to set the illumination area equal to the viewing field area of the objective lens 13 with a high magnification.

Subsequently, the microscope controller 52 turns on the incident-light illumination light source 22 or the transmitting illumination light source 31 that corresponds to the adjusted field shutter 24 or 32 using the illumination controller 43. The imaging controller 51 gives an imaging command to the imaging unit 18. In response, the imaging unit 18 captures an image of the specimen S via the objective lens 13 and generates the specimen image. Thereafter, the microscope controller 52 turns off the incident-light illumination light source 22 or the transmitting illumination light source 31 using the illumination controller 43.

As can be seen from the foregoing, in the second embodiment, similarly to the first embodiment, the transmitting illumination optical system or the incident-light illumination optical system that is used for the imaging can illuminate the specimen only while the imaging unit 18 captures the image of the specimen S, since the microscope controller 52 controls the incident-light illumination light source 22 or the transmitting illumination light source 31 via the illumination controller 43. Further, since the microscope controller 52 adjusts the field shutter 24 or the field shutter 32 using the FS controller 45, the transmitting illumination optical system or the incident-light illumination optical system that is used for the imaging can illuminate only the imaging area of the imaging unit 18.

The imaging controller 51 displays the enlarged display window 80 on the screen of the monitor 55 and displays the generated specimen image inside the enlarged display window 80. The image displayed inside the enlarged display window 80 is a still image when the user selects the command for still image capturing, whereas the displayed image is a moving picture when the user selects the command for dynamic image capturing. In the enlarged display window 80, textual information 82 is displayed together with the specimen image 81 of high magnification as shown in FIG. 11. The textual information 82 is related at least with one of an illumination condition such as intensity of illuminating light at the imaging of the specimen image 81, total time of illumination, total amount of illuminated light, and an imaging condition of the imaging unit 18. Therefore, the control unit 50 stores a set intensity of the incident-light illumination light source 22 and the transmitting illumination light source 31 in the storage unit 58, measures the illumination time by an internal counter and stores the measured time in the storage unit 58, and calculates the total amount of illuminated light based on the set intensity and the illumination time.

Further, when the user selects the command for magnification selection, the operation information management unit 53 gives a command to switch the objective lenses 13 to the microscope controller 52. The microscope controller 52 then switches the objective lens 13 to the one with a selected magnification using the revolver driver 42.

As described above in the second embodiment, similarly to the first embodiment, the user performs the screening while looking at the specimen image as the still image generated by the imaging of a wide area, and the specimen S is illuminated only during the imaging. Therefore, the time the specimen S is illuminated is extremely short compared with the time the specimen S is illuminated when the user performs the screening while looking at the live image. Thus, the illumination-induced discoloration and the damage of the specimen can be well suppressed.

In a screening according to a third embodiment, the microscope controller 52 first arranges the objective lens 13 with a high magnification on the optical path of the microscope relative to the specimen S using the revolver driver 42. The microscope controller 52 shifts the electromotive stage 12 in a stepwise manner by a predetermined amount in the XY direction along a previously set path using the stage driver 41. Whenever the microscope controller 52 moves the electromotive stage 12 in a stepwise manner, the imaging controller 51 gives an imaging command to the imaging unit 18, and the imaging unit 18 captures the image of the specimen S via the objective lens 13 to generate the specimen image as a still image corresponding to a small section and having a high resolution as the preliminary observation image. One of the transmitting illumination optical system and the incident-light illumination optical system that is employed for the imaging illuminates the specimen S.only in an area of the imaging by the imaging unit 18 only while the imaging unit 18 captures the image of the specimen S every time the specimen S is moved stepwise, similarly to the first and the second embodiments.

An amount of movement of one step is set, so that imaging areas of the imaging unit 18 before and after the stepwise moving of the specimen S are adjacent with each other, in other words, so that the specimen image generated before the stepwise moving is located next to the specimen image generated after the stepwise moving. Further, the stepwise moving is repeated vertically and horizontally until a finally obtained specimen image covers an entire desired area. Thus, the imaging position of the imaging unit 18 moves within the XY plane. The imaging position of the imaging unit 18 is moved, for example, as in raster scan.

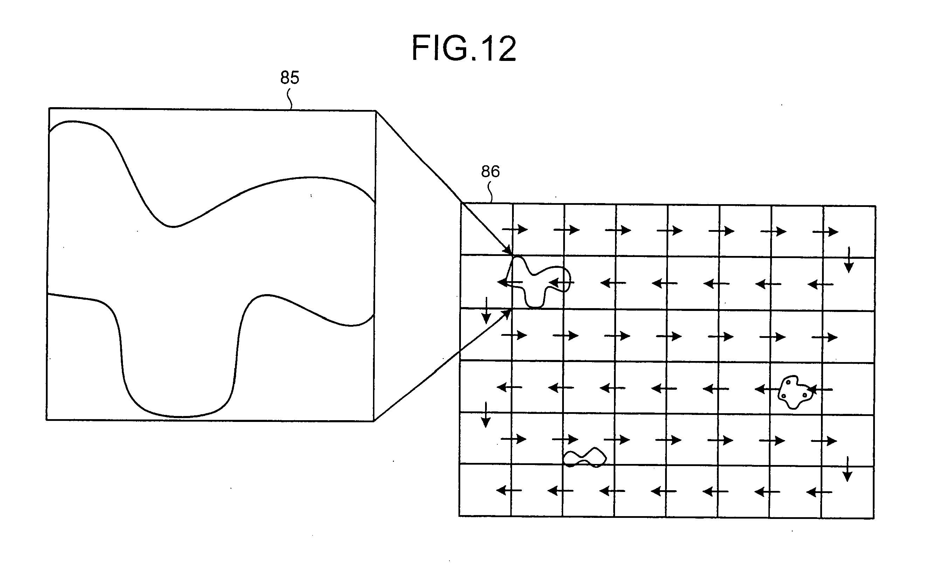

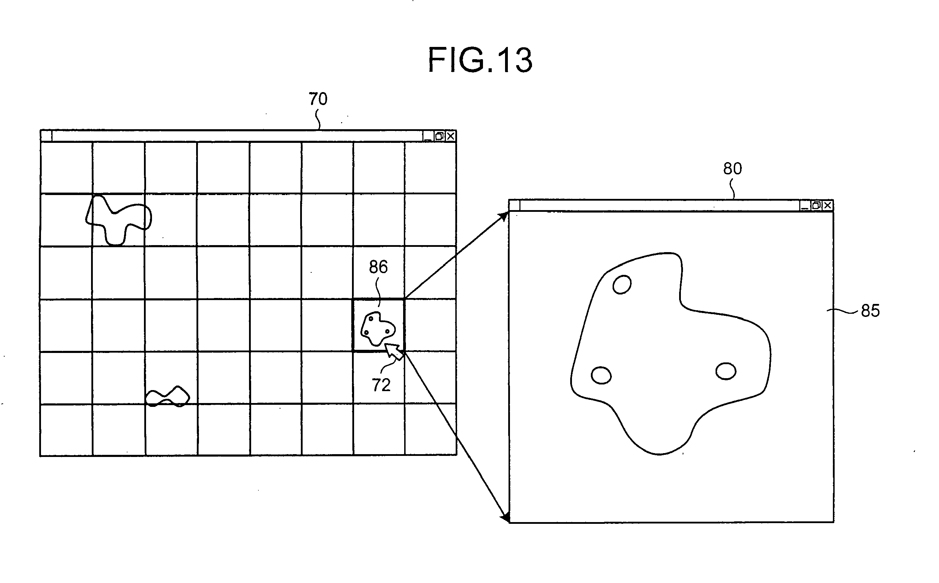

The imaging controller 51 stores the specimen image, which is a still image corresponding to a small section and having a high resolution, generated by the imaging unit 18 in the imaging information database 60 together with the imaging condition. The microscope controller 52 stores the coordinate of the imaging position at the time in the imaging information database 60. Further, the imaging controller 51 compresses and tiles each specimen image 85, which is a still image corresponding to a small section, having a high resolution, and generated by the imaging unit 18, as shown in FIG. 12, and displays the resulting image inside the image display window 70 on the screen of the monitor 55 as shown in FIG. 13. An arrow in FIG. 12 indicates an order of alignment of compressed images 86, and corresponds to a trajectory of the stepwise moving.

In the third embodiment, the operation information management unit 53, in cooperation with the monitor 55 and the input device 56, forms a GUI for standing by for a selection of one of the plural compressed still images in addition to the GUIs described in relation to the first embodiment. The user shifts the mouse pointer 72 by manipulating the mouse, and performs the click manipulation (for example, double clicks the mouse button) on a desired compressed image 86. Thus, the user can designate the compressed image 86. When the user designates the compressed image 86, the imaging controller 51 displays the enlarged display window 80 on the screen of the monitor 55, reads out the specimen image 85, which is a still image corresponding to a small section and having a high resolution, corresponding to the designated compressed image 86 from the imaging information database 60, and displays the read-out specimen image 85 at an original magnification, i.e., in an original decompressed form on the enlarged display window 80.

Further, the operation information management unit 53 displays the popup menu on the screen of the monitor 55 in response to a predetermined click manipulation (for example, when the user right clicks the mouse button) similarly to the first and the second embodiments. The popup menu includes the command for setting the time-lapse imaging position. When the user selects the command for setting the time-lapse imaging position, the microscope controller 52 stores the coordinate of the imaging position at the time the specimen image 85 corresponding to the compressed image 86 pointed by the mouse pointer 72 is generated, in the imaging information database 60 as the time-lapse imaging position as the main observation position. Further, the microscope controller 52 stores at least one of an imaging condition of the imaging unit 18 at the time of generation of the specimen image 85 corresponding to the compressed image 86 pointed by the mouse pointer 72 and an illumination condition of the incident-light illumination optical system or the transmitting illumination optical system in the imaging information database 60 as the time-lapse imaging condition.

The popup menu may include a command for still image capturing or a command for moving image capturing. When the user selects the command for still image capturing or the command for moving image capturing, the operation information management unit 53 gives a command to capture an image corresponding to an area designated by the selected imaging frame 73. The microscope controller 52, in response to the command, controls the electromotive stage 12 by the stage driver 41 so that the imaging position of the imaging unit 18 coincides with the imaging position at the time the specimen image 85 corresponding to the compressed image 86 pointed by the mouse pointer 72 is generated. Further, the imaging controller 51 gives an imaging command to the imaging unit 18, and the imaging unit 18 captures the image of the specimen S via the objective lens 13 and generates the specimen image. The imaging controller 51 displays the enlarged display window 80 on the screen of the monitor 55 and displays the generated specimen image within the enlarged display window 80 without changing the magnification of the specimen image. Thus, the current specimen image of the position the user is interested in is displayed.

In case the microscope is out of focus during the stepwise moving in the XY direction of the imaging position of the imaging unit 18, z-stacking may be performed when the imaging position is moved in the XY direction in a stepwise manner and the imaging is to be performed. According to the z-stacking, the imaging position of the imaging unit 18 is moved stepwise by a predetermined amount also in the Z direction, which is vertical to the XY plane, and thus plural still images are preliminary generated at each imaging position on the XY plane.

As described above, in the third embodiment, the specimen S is illuminated only during the imaging. Therefore, the time the specimen S is illuminated is extremely short. Hence, the illumination-induced discoloration and damage of the specimen S can be well suppressed. In addition, since the high-resolution still images are previously taken, a time required for the screening can effectively be reduced, and the amount of illuminated light for the specimen S can effectively be reduced.

A fourth embodiment of the present invention will be described blow. In the first to third embodiments, a specimen image (hereinafter, "macro image") for screening is generated by capturing one specimen image as being a preliminary observation image through the low magnification objective lens 13 or by capturing plural specimen images to tile them. By contrast, the fourth embodiment allows selection of a generation method for the macro image. Further, the first to third embodiments, the generation of the macro image and the designation of the time-lapse imaging position constitute a sequential screening procedure. By contrast, in the fourth embodiment, the macro image is stored, and generation of the macro image and designation of the time-lapse imaging position are performed separately.

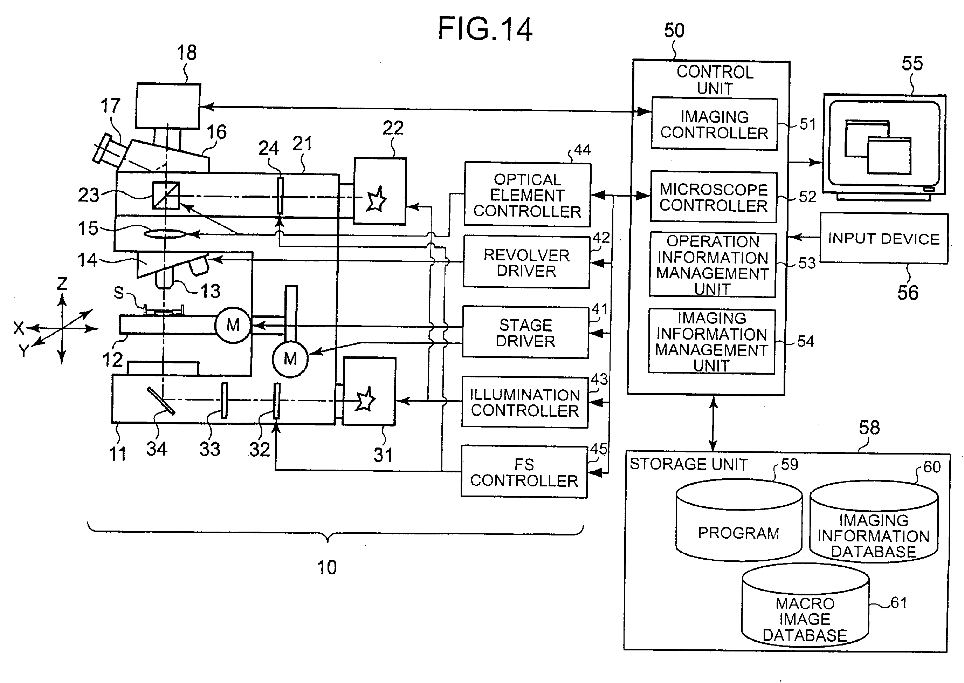

FIG. 14 shows a main configuration of an observation apparatus of the fourth embodiment. The storage unit 58 further stores a macro image database 61 in addition to the components of the observation apparatus shown in FIG. 1. In the observation apparatus of the fourth embodiment, the operation information management unit 53 also serves as a preliminary imaging area controller. The other components are the same as those of the observation apparatus shown in FIG. 1, and the same components are denoted by the same reference characters.

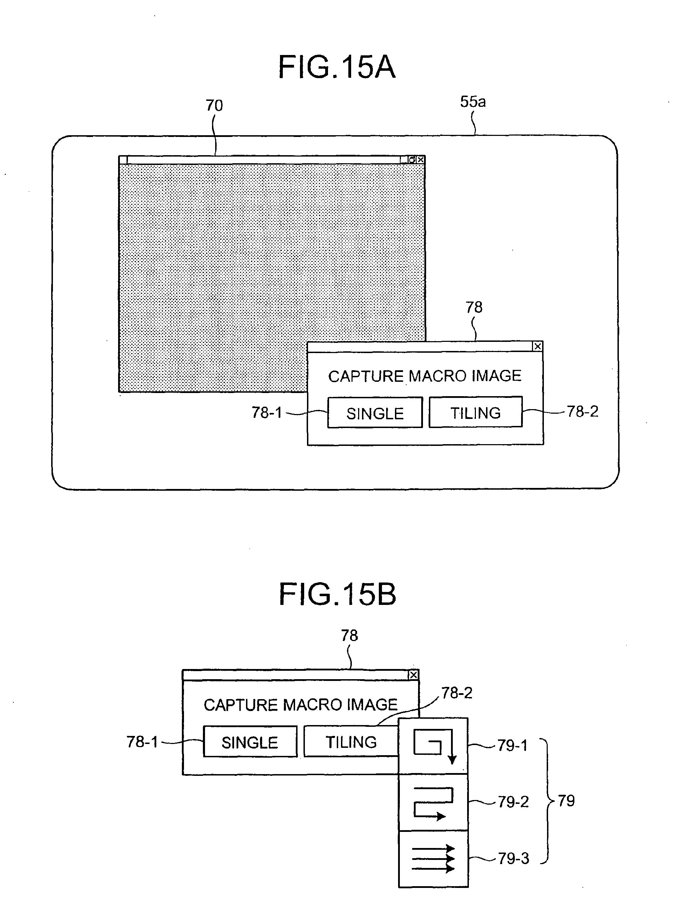

A procedure of generation of a macro image is first explained. In the observation apparatus, as shown in FIG. 15A, the operation information management unit 53 displays a selection window 78 for selecting a generation method for the macro images on a screen 55a of the monitor 55 according to generation instruction information for the generation of the macro image. The generation instruction information is input from, for example, the input device 56. The selection window 78 consists of a single button 78-1 and a tiling button 78-2. The single button 78-1 is for capturing a macro image through the low magnification objective lens 13 as in the first embodiment. The tiling button 78-2 is for tiling a specimen image captured through the high magnification objective lens 13 to generate a macro image. The user can select a generation method for the macro image by selecting the single button 78-1 or the tiling button 78-2 with, for example, a mouse.

The operation information management unit 53 displays an imaging path selection button 79 on the screen 55a when the tiling button 78-2 is selected. The imaging path selection button 79 is for selecting an imaging path along which the specimen S is sequentially captured. The imaging path selection button 79 consists of a tornado button 79-1 for a tornado-like (vertex) scan, a raster button 79-2 for a raster scan (turn), and a one-way scan button 79-3 for a one-way scan. The user first selects one of these buttons with a mouse and the like to designate an imaging path.

When the single button 78 or one of the buttons of the imaging path selection button 79, the imaging controller 51 controls the imaging unit 18 to capture an image of the specimen S according to the selected button to generate a macro image. The imaging controller 51 also stores the generated macro image in the macro image database 61 of the storage unit 58 every time the macro image is generated. Further, the imaging controller 51 stores the sequentially-tiled specimen images in association with each other as a group of the specimen S which forms a macro image in the macro image database 61.

The microscope controller 52 stores at least one of an imaging condition, an illumination condition, and an imaging position in association with the macro image in the macro image database 61. The imaging condition is for the imaging unit 18 at capturing the specimen S to generate the macro image; the illumination condition is for the optical system used at capturing, i.e., the light-incident illumination optical system or the transmitting illumination optical system; and the imaging position is a preliminary observation position on the specimen S. Here, when the macro image is generated by tiling, the microscope controller 52 stores at least an imaging position in association with each of the specimen images which forms a macro image. Accordingly, the microscope controller 52 can associate each of the specimen images which forms a macro image with the imaging position, i.e., the imaging path, and store the specimen images and the imaging positions in the macro image database 61.

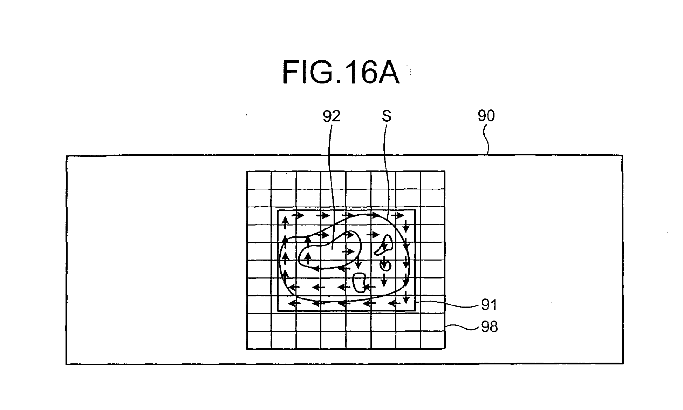

The generation method for tiled macro images is next described below. FIG. 16A shows the specimen S placed on the electromotive stage 12, imaging areas on the specimen S each corresponding to one shot, and an imaging path. In FIG. 16A, a tornado scan path is shown with arrows. It should be noted that the specimen S is placed on the electromotive stage 12 through a slide glass 90 and a cover slip 91 protects the upper portion of the specimen S.

When the tornado button 79-1 is selected, the imaging controller 51 controls the imaging unit 18 to sequentially capture the images of the image positions starting from an imaging starting position 92 every time the specimen S is shifted according to the arrows in a stepwise manner by the electromotive stage 12. The imaging controller 51 also displays the specimen image generated by the imaging unit 18 in the image display window 70 every time the image of each position is captured.

Here, the imaging controller 51 changes the display magnification for the group of the specimen images that are arranged in matrix form in the image display window 70 so that at least one pair of edges of the group of the specimen images comes into contact with an edge of the image display window 70. Specifically, as shown in FIG. 16-2, the imaging controller 51 arranges a sequence of specimen images in the image display window 70 while decreasing the display magnification according to the tornado imaging path.

More specifically, the imaging controller 51 first displays a specimen image 92a corresponding to the imaging position 92 over the image display window 70 (step 0). The imaging controller 51 next decreases the specimen image 92a and a specimen image 93a located in the right side of the specimen image 92a with half of the original magnification so that the left edge of the specimen image 92a and the right edge of the specimen image 93a come into contact with both edges of the image display window 70 (step 1). Here, both specimen images are aligned upward in the image display window 70 and no specimen image areas of the image display window 70 are grayed out.

The imaging controller 51 then maintains the display magnification until the specimen images fill the gray areas, specifically, until a specimen image 94a is displayed (step 3). The imaging controller 51 then decreases a specimen image 95a, which is generated right after the gray areas are filled, with two thirds of the current magnification (step 4). At this point, the group of the specimen images is displayed with the decreased display magnification so that the left edge, including the left edge of the specimen image 95a, of the group of the specimen images and the right edge, including the right edge of the specimen image 93a, of the group of the specimen images come into contact with the left and right edges of the image display window 70, respectively. These specimen images are also aligned downward in the image display window 70, and no specimen image areas are grayed out.

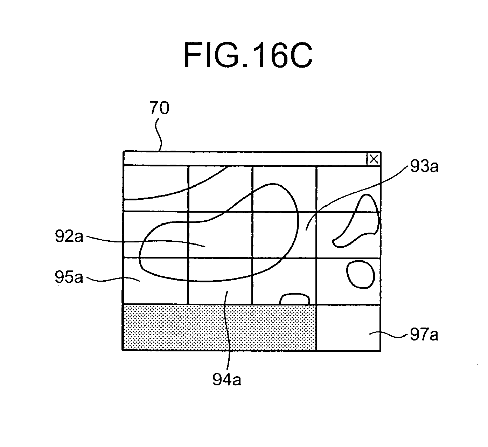

In this way, the imaging controller 51 repeatedly displays a specimen image every time the specimen S is captured along the tornado scan path shown in FIG. 16A se steps are repeated. The imaging controller 51 finally displays a specimen image 96a so that a sequence of specimen images are tiled over the image display window 70 (step 35). When instruction information that indicates breaking off the generation of the macro image is input from the input device 56, the imaging controller 51 sets as one macro image an image consisting of the sequence of specimen images that have been generated on breaking off, and stores the macro image in the macro image database 61. Specifically, as shown in FIG. 16C, the macro image consists of thirteen specimen images 92a to 97a which are tiled along the tornado scan path.

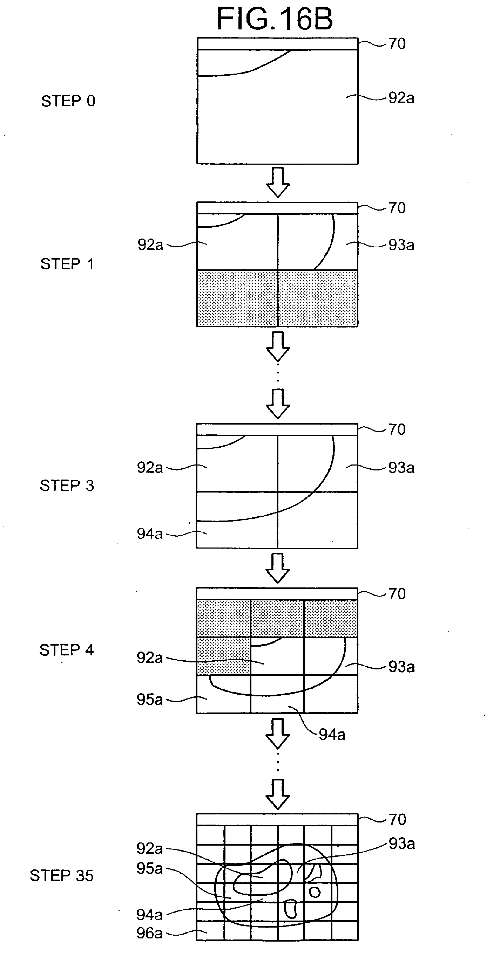

In the foregoing, the tornado scan path is described in detail. Substantially, the imaging controller 51 may sequentially display a sequence of specimen images along the raster scan path or the one-way scan path in the image display window 70 in the same manner as described above, to generate a macro image. The imaging controller 51 may also break off the generation of the macro image and store an incomplete macro image in the macro image database 61. The tornado scan path consists of thirty-five steps in FIG. 16, but not limited thereto. The tornado scan path can consist of any steps as long as it is not out of an allowable area 98 of the specimen S.

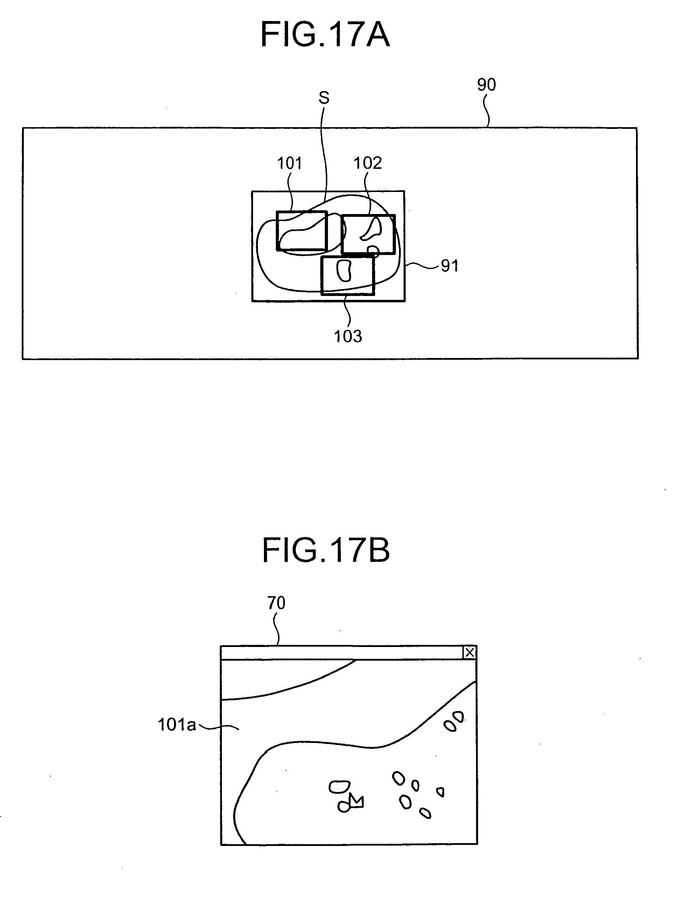

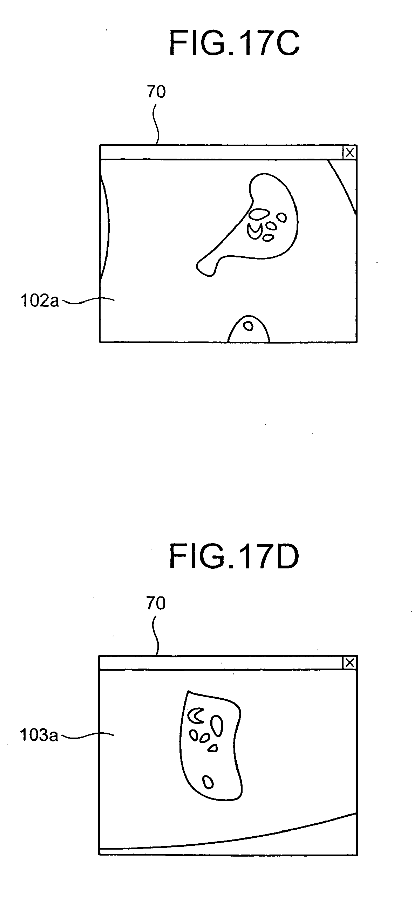

The imaging controller 51 can store in advance a plurality of macro images generated as described above in the macro image database 61. Specifically, for example, for different imaging areas 101 to 103 in the specimen S as shown in FIG. 17A, macro images 101a to 103a may be generated and displayed in the image display window 70 as shown in FIG. 17B to 17D, and then stored in the macro image database 61. In this case, the microscope controller 52 stores each of the macro images 101a to 103a in association with at least one of an imaging condition, illumination condition, and imaging position in the macro image database 61.

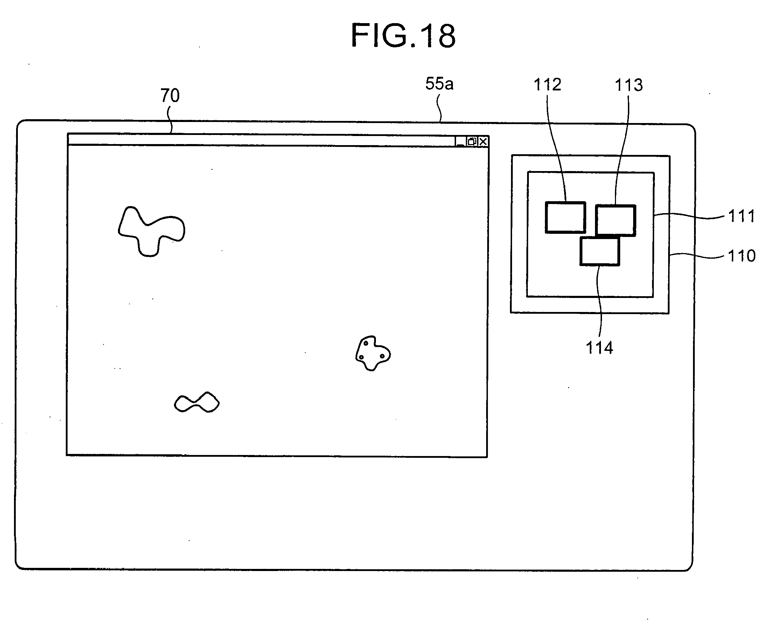

The designation method for an imaging area of a macro image, in other words, the designation method for an imaging position of a specimen image generated as a macro image, is next described below. In the observation apparatus according to the fourth embodiment, the operation information management unit 53 as being a preliminary imaging area controller displays a map image showing an observable area for the specimen S on the monitor 55, thereby allowing the user to designate a desired area on the map image to select an imaging area of a macro image. FIG. 18 shows a map image. As shown in FIG. 18, the operation information management unit 53 displays a map window 110 on a screen 55a of the monitor 55 according to selection instruction information for starting selection of an imaging position of the macro image. The selection instruction information is input from, for example, the input device 56.

The operation information management unit 53 displays as a map image 111 either an image of the specimen S such as pseudo-observation image or super macro image or a frame indicating an observable area without an observation image. The pseudo-observation image is a rough observation image that is generated through a pre-observation of the specimen S; the super macro image is, for example, a low magnification specimen image that is generated through a extremely-low magnification objective lens 13. The user can designate a desired imaging area by specifying a desired position on the map image 111 through, for example, a click of a mouse included in the input device 56 while viewing the map image 111 on the screen 55a.

When position information indicating a position on the map image 111 is input in such a way, the operation information management unit 53 sets the position as a center and superimposes a rectangular frame mark with a predetermined size onto the image map 111. Accordingly, the operation information management unit 53 clearly shows the imaging area of the macro image corresponding to the position information on the map image 111. FIG. 18 shows frame marks 112 to 114 as examples of the superimposing mark. If a macro image is generated by tiling specimen images generated through the high magnification objective lens 13, the size of each frame mark is set based on the observation magnification of the observation optical system and the number of tiled specimen images.

If plural pieces of position information are input and cause an overlapping area of frame marks corresponding to the pieces of position information, in other words, if imaging areas of the macro images designated by the user overlap, the operation information management unit 53 modifies the position of a frame mark including the overlapping area, in other words, the position of at least one imaging area, to eliminate overlapping. As a result, the operation information management unit 53 can avoid multiple imaging and multiple exposure over all areas in the specimen S at the generation of a macro image.

The operation information management unit 53 can store imaging area information indicating the imaging area of the macro image set as described above in the macro image database 61 through the storage unit 58. The observation apparatus according to the fourth embodiment can thus generate macro images after setting the imaging areas of all the macro images. Here, the imaging controller 51 generate the macro images sequentially based on the imaging area information stored in the macro image database 61. The imaging controller 51 may generate a macro image corresponding to the imaging area every time the imaging area of the macro image is designated.

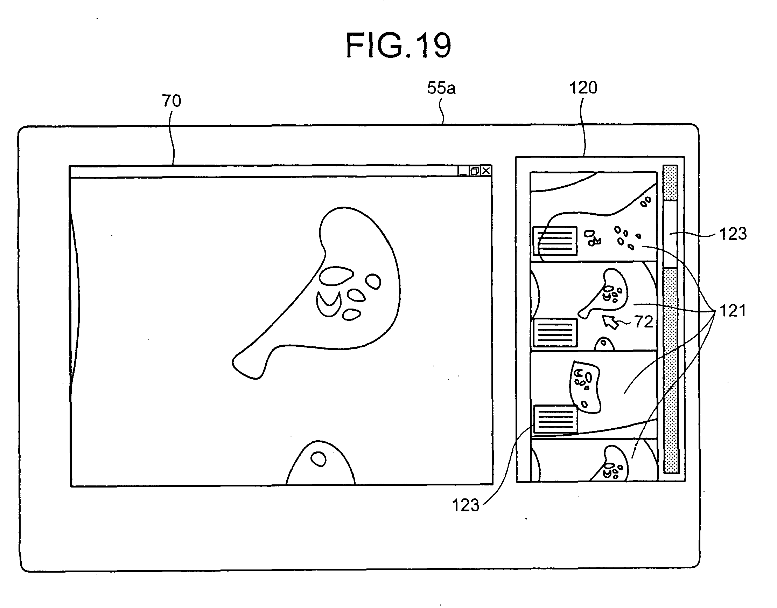

A display method for a macro image stored in the macro image database 61 is next described below. FIG. 19 shows a display image used for explaining the display method. As shown in FIG. 19, the imaging controller 51 displays a macro image selection window 120 on a screen 55a of the monitor 55 and thumbnails the macro images 121 stored in the macro image database 61 in the macro image selection window 120, according to display instruction information for displaying a macro image. The display instruction information is input from, for example, the input device 56.

If all the macro images 121 cannot be displayed in the macro image selection window 120 at the same time, the imaging controller 51 scrolls the macro images in the macro image selection window 120. In FIG. 19, the macro images 121 can be scrolled up or down with a slide bar 122 slid by dragging a mouse included in the input device 56.

The imaging controller 51 also overlays condition information 123 as textual information onto each macro image 121. The condition information 123 indicates at least one of the imaging condition, the illumination condition, and the imaging position which are each stored in association with the macro image in the macro image database 61. The overlaid information can be hidden according to predetermined instruction information input from the input device 56. The imaging controller 51 may display a pop-up of the condition information 123 in place of the overlaid condition information 123. For example, the imaging controller 51 can pop-up the condition information 123 corresponding to the macro image, which is selected by double-clicking the mouse button with a mouse pointer 72 positioned on the macro image 121.

The imaging controller 51 can also enlarge the selected macro image 121 in the image display window 70. The condition information 123 may be overlaid or displayed as a pop-up on the enlarged macro image.

As described above, the observation apparatus according to the fourth embodiment can store the macro image generated for screening procedure in the macro image database 61, so that the user can designate a time-lapse imaging position at a desired timing by reading the macro image from the macro image database 61, without performing the generation of the macro image and the designation of the time-lapse imaging position sequentially. The observation apparatus can also store plural macro images, which allows generation of plural macro images in advance before the screening procedure. As a result, workability and efficiency of the screening procedure can be improved. This improvement leads to improvement of accuracy of the screening procedure.

The observation apparatus can repeatedly designate the time-lapse position, thereby reducing damages to the specimen S at screening. The conventional observation apparatus generates a macro image every time the time-lapse imaging position is designated, and illuminates the specimen S with an illumination light every generation of the macro image, because such a observation apparatus does not store any macro images. As a result, the specimen S is damaged or discolored every illumination. By contrast, the observation apparatus according to the fourth embodiment can reduce illumination of the specimen S and damages to the specimen S by storing the macro images.

The observation apparatus also allows designation of the imaging position of a macro image on the map image 111, thereby reducing damages to the specimen S at the designation procedure. If no map image 111 is used, the user has to designate the imaging area of a macro image while viewing live images of the specimen S, in other words, while the specimen S is continuously illuminated with an illumination light during the designation procedure. This leads to heavy damages to the specimen S. By contrast, the observation apparatus according to the fourth embodiment does not require to illuminate the specimen S during the designation of the imaging area of a macro image, thereby reducing damages to the specimen S drastically. In the designation procedure using the map image 111, since the plural macro images do not overlap, the specimen S is not multiply exposed in the generation of the macro image, thereby reducing damages due to the exposure.

In the observation apparatus, the user may designate an imaging area of a macro image while viewing live images of the specimen S, if necessary. In this case, for example, the specimen S is automatically scanned along a predetermined path with the electromotive stage 12, and receives predetermined designation information when a desired area in the specimen S is displayed in the live image, so that the desired area is designated as the imaging area of the macro image.

The observation apparatus can use an appropriate generation method for each specimen S or each observation or each objective lens 13, because the observation apparatus allows the user to select one of the generation methods for the macro image. Accordingly, the accuracy of the screening procedure can be improved as well as the accuracies of and the time-lapse imaging and the observation result based on the time-lapse imaging can be improved.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An observation apparatus comprising:
an illumination unit (13, 15, 22 to 24, 31 to 34) that illuminates a specimen (S);
an imaging unit (18) that captures an image of the specimen (S) to generate an observation image;
an imaging and display controller (51) that controls the imaging unit (18) so that an image of the specimen (S) is preliminary captured to generate a preliminary observation image which is a still image, and controls a display unit (55) so that the preliminary observation image is displayed;
a storage controller (52) that stores, in a storage unit (58), a position which is selected based on the preliminary observation image, the position being employed as a main observation position for a main observation of a partial region inside the specimen (S); and
an illumination controller (52) that controls the illumination unit (13, 15, 22 to 24, 31 to 34) so that the specimen (S) is illuminated only in a time period during which the imaging unit (18) captures an image of the specimen (S), at least when the imaging unit (18) generates the preliminary observation image.

2. The observation apparatus according to claim 1, wherein
the illumination unit (13, 15, 22 to 24, 31 to 34) includes a field shutter (24, 32) that restricts an illumination area on the specimen (S),
the illumination controller (52) coincides the illumination area of the illumination unit (13, 15, 22 to 24, 31 to 34) with an imaging area on the specimen (S) of the imaging unit (18) using the field shutter (24, 32), at least when the imaging unit (18) generates the preliminary observation image.

3. The observation apparatus according to claim 1 or 2, wherein
the imaging and display controller (51) controls the imaging unit (18) so that an image of a region wider than a main observation area on the specimen (S) is captured to generate the preliminary observation image, and controls the display unit (55) so that the preliminary observation image is displayed.

4. The observation apparatus according to claim 3, further comprising
an observation area display controller (53) that controls the display unit (55) so that an image mark (73) indicating the main observation area is displayed on a selected position on the preliminary observation image in an overlapping manner, the selected position being indicated by position selection information which is input from an input device (56), wherein
the storage controller (52) stores, in the storage unit (58), a position on the specimen (S) corresponding to the selected position in the image mark (73) indicated by mark selection information input from the input device (56) as the main observation position.

5. The observation apparatus according to claim 3, further comprising
an observation area display controller (53) that extracts an observation target region from the preliminary observation image displayed by the display unit (55) to detect a central position of the observation target region, and controls the display unit (55) so that the image mark (73) indicating the main observation area is displayed on the central position in an overlapping manner, wherein
the storage controller (52) stores, in the storage unit (58), a position on the specimen (S) corresponding to the central position as the main observation position.

6. The observation apparatus according to claim 5, further comprising
a recording controller (54) that deletes a record of the main observation position stored in the storage unit (58), wherein
the observation area display controller (53) controls the display unit (55) so that the image mark (73) is deleted from the preliminary observation image based on mark deletion information input from the input device (56), and
the recording controller (54) deletes a record of the main observation position corresponding to the central position in the image mark indicated by the mark deletion information from the storage unit (58).

7. The observation apparatus according to any one of claims 4 to 6, wherein
the observation area display controller (53) controls the display unit so that plural image marks (73) are displayed.

8. The observation apparatus according to any one of claims 4 to 7, wherein
the observation area display controller (53) controls the display unit (55) so that the image mark (73) is moved to a corrected position on the preliminary observation image based on mark position correction information which is input from the input device (56), and
the storage controller (52) stores, in the storage unit (58), a position on the specimen (S) corresponding to the corrected position as the main observation position, when the storage unit (58) stores the main observation position of the main observation area corresponding to the image mark (73) moved to the corrected position.

9. The observation apparatus according to any one of claims 4 to 8, further comprising
a moving unit (12, 41) that moves the specimen (S) relative to the imaging unit (18), and
a moving controller (52) that controls the moving unit (12, 41) so that the specimen (S) is moved to a position where a position on the specimen (S) corresponding to a central position of the image mark (73) coincides with a central position of an imaging area of the imaging unit (18) on the specimen (S) based on re-imaging information which is input from the input device (56), wherein
the imaging and display controller (51) controls the imaging unit (18) so that an image of the specimen (S) within the main observation area corresponding to the image mark (73) indicated by the re-imaging information is recaptured to generate a re-observation image, and controls the display unit (55) so that the re-observation image is displayed, and
the illumination controller (52) controls the illumination unit (13, 15, 22 to 24, 31 to 34) so that the specimen (S) is illuminated only in a time period during which the imaging unit (18) captures an image of the specimen (S), at least when the imaging unit (18) generates the re-observation image.

10. The observation apparatus according to claim 9, wherein
the illumination unit (13, 15, 22 to 24, 31 to 34) includes a field shutter (24, 32) that restricts an illumination area on the specimen (S),
the illumination controller (52) controls the illumination unit (13, 15, 22 to 24, 31 to 34) so that the illumination area coincides with an imaging area on the specimen (S) of the imaging unit (18) using the field shutter (24, 32), at least when the imaging unit (18) generates the re-observation image.

11. The observation apparatus according to claim 9 or 10, further comprising
an objective lens holding unit (14) that holds a low magnification objective lens (13) and a high magnification objective lens (13), and selectively arranges one of the low magnification objective lens (13) and the high magnification objective lens (13) relative to the specimen (S), wherein
the imaging unit (18) captures an image of the specimen via one of the low magnification objective lens (13) and the high magnification objective lens (13), and
the imaging and display controller (51) controls the imaging unit (18) so that the preliminary observation image is generated when the low magnification objective lens (13) is arranged relative to the specimen (S), and so that the re-observation image is generated when the high magnification objective lens (13) is arranged relative to the specimen (S).

12. The observation apparatus according to any one of claims 9 to 11, wherein
the storage controller (52) stores, in the storage unit (58), at least one of an imaging condition of the imaging unit (18) and an illumination condition of the illumination unit (13, 15, 22 to 24, 31 to 34) at a time of generation of the re-observation image in association with the main observation position.

13. The observation apparatus according to any one of claims 9 to 12, wherein
the imaging and display controller (51) controls the display unit (55) so that at least one of the imaging condition of the imaging unit (18) and the illumination condition of the illumination unit (13, 15, 22 to 24, 31 to 34) at the time of generation of the re-observation image (81) is displayed as textual information (82) together with the re-observation image (81).

14. The observation apparatus according to claim 1 or 2, further comprising
a moving unit (12, 41) that moves the specimen (S) in a stepwise manner by a predetermined amount along a predetermined imaging path, wherein
the imaging and display controller (51) controls the imaging unit (18) so that an image of the specimen (S) is captured to generate the preliminary observation image every time the moving unit (12, 41) moves the specimen (S) in a stepwise manner, and controls the display unit (55) so that a plurality of the preliminary observation images are displayed in a parallel arrangement corresponding to the imaging path,
the illumination controller (52) controls the illumination unit (13, 15, 22 to 24, 31 to 34) so that the specimen (S) is illuminated only in a time period during which the imaging unit (18) captures an image of the specimen (S) every time the moving unit (12, 41) moves the specimen (S) in a stepwise manner.

15. The observation apparatus according to claim 14, wherein
the moving unit (12, 41) moves the specimen (S) in a stepwise manner so that imaging areas on the specimen (S) whose image is to be captured by the imaging unit (18) are adjacent to each other before and after moving the specimen.

16. The observation apparatus according to claim 15, wherein
each size of the imaging areas is equal to a size of the main observation area for the main observation.

17. The observation apparatus according to any one of claims 14 to 16, wherein
the storage controller (52) stores, in the storage unit (58), a position on the specimen (S) corresponding to a central position of the preliminary observation image as the main observation position, based on image selection information which is input from the input device (56).

18. The observation apparatus according to claim 17, wherein
the storage controller (52) stores, in the storage unit (58), at least one of an imaging condition of the imaging unit (18) and an illumination condition of the illumination unit (13, 15, 22 to 24, 31 to 34) at a time of generation of the preliminary observation image indicated by the image selection information in association with the central position.

19. The observation apparatus according to any one of claims 14 to 18, further comprising
a moving controller (52) that controls the moving unit (12, 41) so that the specimen (S) is moved to a position where a position on the specimen (S) corresponding to the central position of the preliminary observation image indicated by the re-imaging information coincides with a central position of an imaging area of the imaging unit (18) on the specimen (S), based on the re-imaging information input from the input device (56),
the imaging and display controller (51) controls the imaging unit (18) so that an image of a region on the specimen (S) corresponding to the preliminary observation image indicated by the re-imaging information is recaptured to generate a re-observation image, and controls the display unit (55) so that the re-observation image is displayed, and
the illumination controller (52) controls the illumination unit (13, 15, 22 to 24, 31 to 34) so that the specimen (S) is illuminated only in a time period during which the imaging unit (18) captures the image of the specimen (S), at least when the imaging unit (18) generates the re-observation image.

20. The observation apparatus according to claim 19, wherein
the illumination unit (13, 15, 22 to 24, 31 to 34) includes a field shutter (24, 32) that restricts an illumination area on the specimen,
the illumination controller (52) controls the illumination unit (13, 15, 22 to 24, 31 to 34) so that the illumination area coincides with an imaging area on the specimen (S) of the imaging unit (18) using the field shutter, at least when the imaging unit (18) generates the re-observation image.

21. The observation apparatus according to any one of claims 14 to 20, wherein
the imaging and display controller (51) controls the display unit (55) so that a plurality of preliminary observation images are compressed and displayed in parallel arrangement according to the imaging path, and so that the preliminary observation image is displayed in a decompressed state based on enlarged display information which is input from the input device (56).

22. The observation apparatus according to any one of claims 1 to 21, wherein
the imaging and display controller (51) extracts pixels having a brightness within a predetermined brightness range from pixels constituting the preliminary observation image, and controls the display unit (55) so that the extracted pixels are displayed.

23. The observation apparatus according to claim 22, further comprising
a brightness range display controller (53) that controls the display unit (55) so that a brightness range display image (76) which indicates a brightness range of pixels displayed by the display unit (55) among the pixels constituting the preliminary observation image is displayed, and so that the brightness range is changed based on brightness range information which is input from the input device (56), wherein
the imaging and display controller (51) extracts pixels having a brightness within the brightness range indicated by the brightness range display image (76) from the pixels constituting the preliminary observation image, and controls the display unit (55) so that the extracted pixels are displayed.

24. The observation apparatus according to claim 23, wherein
the brightness range display image (76) is a bar-like slider whose length and position are changeable.

25. The observation apparatus according to any one of claims 1 to 24, wherein
the imaging and display controller (51) controls the storage unit (58) to store the preliminary observation images every time the imaging unit (18) generates the preliminary observation image.

26. The observation apparatus according to any one of claims 14 to 21, wherein
the imaging and display controller (51) controls the storage unit (58) to store preliminary observation images captured every time the specimen (S) is moved along the imaging path, in association with each other.

27. The observation apparatus according to claim 25 or 26, wherein
the imaging and display controller (51) controls the display unit (55) to thumbnail the preliminary observation images stored in the storage unit (58).

28. The observation apparatus according to claim 26, wherein
the imaging and display controller (51) controls the display unit (55) to thumbnail the preliminary observation images stored in the storage unit (58).

29. The observation apparatus according to any one of claims 25 to 28, wherein
the storage controller (52) controls the storage unit (58) to store the preliminary observation image in association with at least one of an imaging condition of the imaging unit (18), an illumination condition of the illumination unit (13, 15, 22 to 24, 31 to 34), and a preliminary observation position corresponding to the preliminary observation image at the time of generation of the preliminary observation image.

30. The observation apparatus according to claim 29, wherein
the imaging and display controller (51) controls the display unit (55) to display the preliminary observation image stored in the storage unit (58) in association with condition information (123), the condition information (123) including at least one of the imaging condition, the illumination condition, and the preliminary observation position, which are associated with the preliminary observation image.

31. The observation apparatus according to any one of claims 1 to 30, further comprising
a preliminary imaging area controller (53) that controls the display unit (55) to display a map image (111) indicating an observable area of the specimen (S) and to display preliminary imaging area information on the map image (111), the preliminary imaging area information indicating a preliminary imaging area which is designated based on the map image (111) and in which the specimen (S) is preliminarily captured, wherein
the imaging and display controller (51) controls the imaging unit (18) to preliminarily capture the specimen (S) in the preliminary imaging area to generate the preliminary observation image.

32. The observation apparatus according to claim 31, wherein
when a plurality of preliminary imaging areas are designated and at least some of the preliminary imaging areas overlap, the preliminary imaging area controller (53) modifies a position of at least one of the preliminary imaging areas including the overlapping areas to eliminate overlapping.

33. The observation apparatus according to any one of claims 14 to 21, wherein
the imaging and display controller (51) controls the display unit (55) to display the preliminary observation images arranged corresponding to the imaging path in a predetermined display region (70), and changes a display magnification of the preliminary observation images so that at least a pair of edges of a group of the preliminary observation images come into contact with edges of the predetermined display region (70), every time the specimen (S) is moved in a stepwise manner.
